# EUROPEAN PATENT SPECIFICATION

(11) **EP 0 801 757 B1**
(45) Date of publication and mention of the grant of the patent: **20.10.2004**
(21) Application number: 94930686.4
(22) Date of filing: 26.09.1994
(51) Int. Cl.: G02B 7/02, G02B 7/00, G01M 11/04

(54) **OPTICAL BENCH SYSTEM**
SYSTEM FÜR OPTISCHE BANK
SYSTEME DE BANC OPTIQUE

(43) Date of publication of application: 22.10.1997
(73) Proprietor: Afshari, Ali, Trabuco Canyon, CA 92679 (US)
(72) Inventor: Afshari, Ali, Trabuco Canyon, CA 92679 (US)
(74) Representative: Ebner von Eschenbach, Jennifer
(86) International application number: PCT/US1994/011472
(87) International publication number: WO 1996/010204

(56) References cited:
- WO-A-86/03601
- DE-A- 2 636 657
- GB-A- 1 417 882
- SE-B- 340 675
- SE-B- 465 328
- US-A- 3 747 890
- US-A- 3 945 600
- US-A- 4 796 252
- US-A- 5 035 333

## Description

### Technical Field

This invention relates to optical bench system sets and includes a plurality of optical bench components in each set that may be used together to construct a multiplicity of optical instruments.

### Background Art

Of interest in the prior art is the German Offenlegungsschrift 26 36 657. Its elements include optical mounts which are implemented as square plates having perforations through which rods may extend at each corner. The optical mounts provide a relatively large opening in which optical elements such as lenses, mirrors, gratings and the like can be positioned at the center thereof. Pins are provided for the purpose of securing the optical mounts to the rods at selected positions. The plates are clamped together at right angles by means of corner connectors and separate pins. Although this apparatus and method for assembly is effective for rough, temporary set-up, sufficient rigidity is not maintained for precise optical alignment and additionally, the square shape of the plates limits the number of configurations in which the plates may be assembled.

The prior art also includes United States Patent number 5,035,333 to Hartmut Klingner for ARRANGEMENT FOR CONSTRUCTING A MICRO-OPTIC BENCH issued July 30, 1991, and reference patents and documents cited therein. The device described in the Klingner patent provides mounts for holding optical elements that preferably are manufactured out of injection-molded plastic. It appears that this technique has been employed in order to provide an elastic snap-together feature between the rods and the optical mounts. The perforations through the mounts have elevations that have been called knobs or ribs distributed along their circumferences in order to establish this snap-together fastening facility. Although this system does not require set screws and is inexpensive to manufacture, it must be fabricated out of plastic and it does not offer any solution for mounting the plates together.

Of lesser import but still of interest are two Swiss patents numbered 340675 and 465238 provided herewith as being of interest in the general field.

In the prior art, the square shape of the optical mounting plates limits the angles at which the plates can be mounted together. Plates are conventionally fastened together by means of screws, therefore, all four sides of the plates have to be provided with some threaded bores, whether the bores are used in every assembly or not. Further, the plates are joined together by corner connectors which must have equal numbers of bores through which the screws are secured. The plates are ,therefore, highly labor intensive to produce. With the square shape, optical components must be held at four points since the retaining screws must be placed at each side of the plate. Three-point positional adjustment is more advantageous while at the same time allowing easier removal of the optical component. It should also be again especially noted that square plates are much more labor-intensive to manufacture than round plates. Square plates must be machined at four sides in order to achieve precise right angles at all corners whereas the machining of round plates only requires a simple lathe operation.

The prior art devices presented, including those cited in the Klingner patent, are commendable and show a creative spirit for their times. The inventors and their inventions have contributed remarkably to the technology involved. However, these prior art structures do not include those combined elements of the instant invention that provide greater facility of use and ingenious arrangement of components and that make the instant invention the high culmination in the art.

### Disclosure of Invention

Components in the field of optics are usually manufactured to strict tolerances and meticulously positioned by means of precision threads and screws. These optical components must, in certain applications, operate with high precision, thus justifying the high fabrication costs that prohibit these devices from being used in applications in which less accuracy is required. The present invention is intended as a development of an arrangement or optical system set that can be assembled as a high precision optical bench with maximum flexibility. Through the advantages of the invention, it will be possible to construct a much wider range of optical setups than is possible with the use of conventional square plates. The openings in the plates are symmetrically spaced apart so as to allow the plates to be mounted together at different angles with small increments and actually at any angle using separate plates with slight modification. Thus the system set can be employed in any application where high precision is a prerequisite and can be utilized in combinations with conventional optical elements.

In accordance with the instant invention, optical mounting plates are provided by means of which a multiplicity of optical experiments and configurations may be assembled, verified and tested and otherwise examined at the pleasure of a user. The present invention provides an optical bench system as claimed in claim 1 herein. A significant feature of the present invention is the non-rectangular aspect of the optical mounting plates. Greater precision and accuracy in adjustment and near continuous vis a vis discrete variations in optical alignment and positioning have been provided. More economical fabrication costs and greater flexibility are achieved in accordance with the invention by the provision of unthreaded, radially positioned openings in the mounting plates and providing threaded bores on the corner connectors instead thus effectively reducing the costs of the mounting sets. Where high precision is not required, because the openings in the plates are not threaded, the plates can be made out of plastic thereby making them even less expensive to manufacture.

### Brief Description of Drawings

Further advantages and features of the instant invention will be more fully apparent to those skilled in the art from the ensuing detailed description thereof, regarded in conjunction with the accompanying drawings wherein like reference numerals refer to like parts throughout and in which:
Figure 1 is an exploded perspective view of an assembly in accordance with the invention.
Figure 2 is a detail plan view in cross section of a typical specification of an optical mounting plate.
Figure 3 is another detail plan view in cross section of a different optical mounting plate.
Figure 4 is a plan view in cross section of yet another optical mounting plate.
Figure 5 is a plan view in cross section of a specially modified optical mounting plate.
Figure 6 is a plan view in cross section of a specially modified optical mounting plate.
Figure 7 is a plan view in cross section of another specially modified optical mounting plate.
Figure 8 is an exploded plan view in cross section of a specially modified optical mounting plate showing a securing means.
Figure 9 is a plan view of a specially modified optical mounting plate in accordance with the invention.
Figure 10 is a plan view in cross section of a specially modified optical mounting plate in accordance with the invention.
Figure 11 is a plan view in cross section of a specially modified optical mounting plate showing means for continuous angular adjustment.
Figure 12 is a perspective view exemplifying a typical assembly of various optical mounting plates.
Figure 13 is a perspective much like Figure 12 also showing the assembly of various optical mounting plates.
Figure 14 is a plan view in cross section of another optical mounting plate in accordance with the invention.
Figure 15 is a perspective view of a corner connector.
Figure 16 is a perspective view of a corner connector different from that shown in Figure 15.
Figure 17 is a perspective view exemplifying the assembly of full or half cubes through the utilization of various plates and corner connectors and including a light shield.
Figure 18 is a plan view of a corner connector showing radially positioned bores for use in positioning elements.
Figure 19 is a perspective view of the corner connector of Figure 18 with the bores shown in phantom.
Figure 20 is a view of an optical mount in accordance with the invention.
Figure 21 is a perspective view of an assembly showing the use of the corner connector of Figures 18 and 19.
Figure 22 is a perspective view showing how two different sizes of optical construction plates may be joined together and also showing the use of support rods to construct a half cube.
Figure 23 is a plan view in cross section of an polygonal optical mounting plate such that an inscribed circle will have the same circumference as the optical mounting plates having circular cross section as depicted heretofore.
Figure 24 is a perspective view showing how the optical element shown in Figure 23 may be utilized in the configuration of special optical cubes and the like.

### Best Mode for Carrying Out the Invention

Although specific embodiments of the invention will now be described with reference to the drawings, it should be understood that such embodiments are by way of example only and merely illustrative of but a small number of the many possible specific embodiments which can represent applications of the principles of the invention.

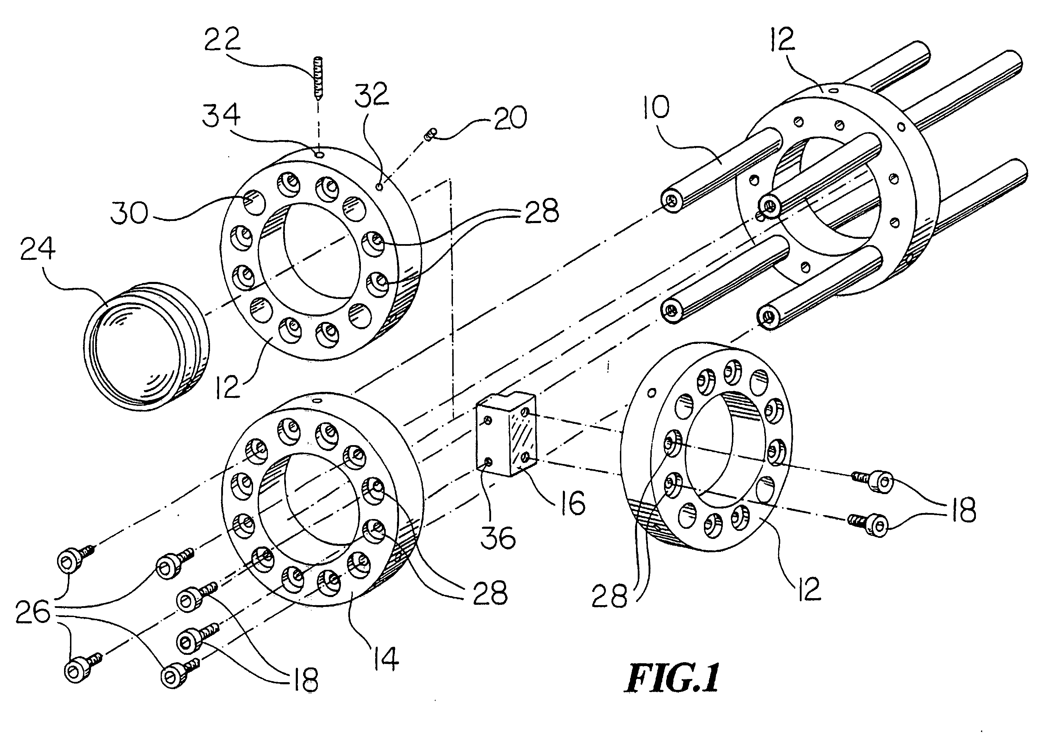

Referring to the drawing and to Figures 1 through 11 and 14 and 20 with greater particularity, optical mounting plate components of the Optical Bench System have been depicted.

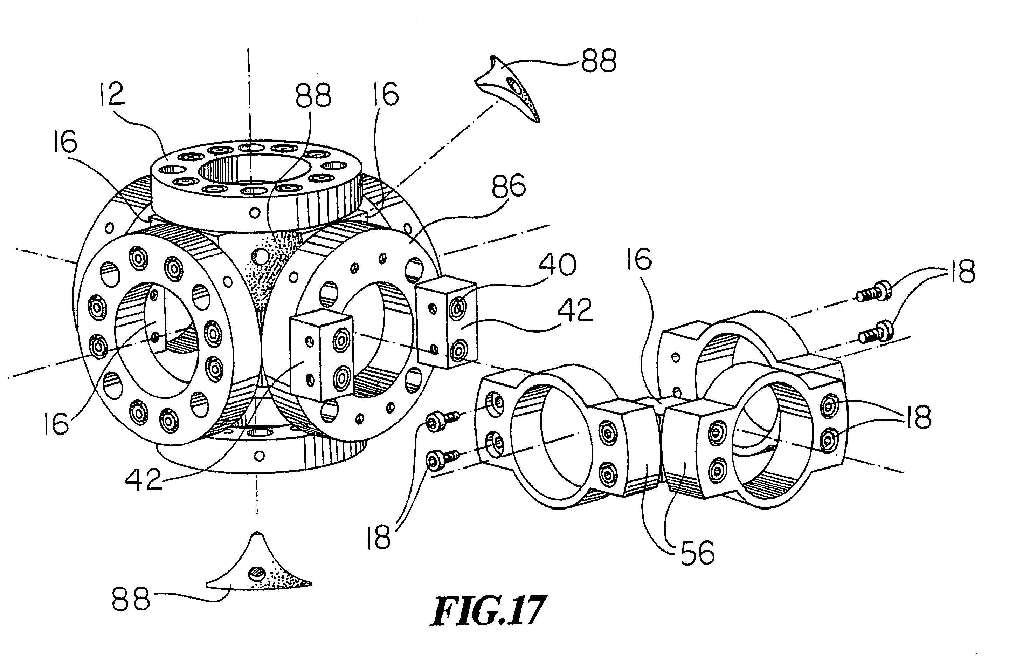

Particularly noting Figure 1 at this time, an exploded view of a typical configuration showing how a first generally truncated, circular cylindrical optical mounting plate 12, having a plate thickness dimension such that threaded bores may be fabricated therein in a radial direction and having axially directed rod accepting apertures or passages 30 and plate retaining rods 10 fed therethrough, may be fashioned. A corner connector 16, having third threaded bores or apertures 36 may connect another optical mounting plate 12 to a second generally truncated cylindrical optical mounting plate 14 by means of fastening screws 18 and counter-bored apertures 28 adapted to accept said screws. Rods 10 have been shown as threaded at the ends thereof so as to be secured to plate 14 by means of a second set of fastening screws 26. A first set of set screws 20 along with first threaded apertures or bores 32, adapted to accept said set screws, may be used to secure the positions of plates 12 along rods 10. A typical optical component 24 may be mounted and secured within the concentric central bore of an optical mounting plate by means of a second set of set screws 22 along with second threaded apertures or bores 34. In greater particularity, Figure 1 shows how three fundamental arrangements of the optical mounting plates may be assembled in accordance with the invention. In a first configuration, a plurality of mounts 12 can be slid onto rods 10 and locked into position by means of set screws 20. Thus any of the plates so assembled can be securely positioned at any point along the rods. In a second configuration, a mount such as 14 can be fastened to the threaded ends of the rods 10 by means of the screws 26, therefore, mounts such as 14 may be fixed at either ends of the rods so that the rods may be fastened to any of the holes 28 around the mount. In a third construction, any two mounts may be secured together at right angles with a corner connector 16 which has threaded bores 36. Screws 18 secure the mounts to the corner connector 16 through the holes 28. By replication of this assembly procedure at the sides of each plate, an entire optical cube or even multiple cubes can be constructed as has been shown in Figure 17. A simple optical element 24 may be secured in the mount by set screws 22 in threaded bores 34 and positioned so as to allow a user to center the optical element 24.

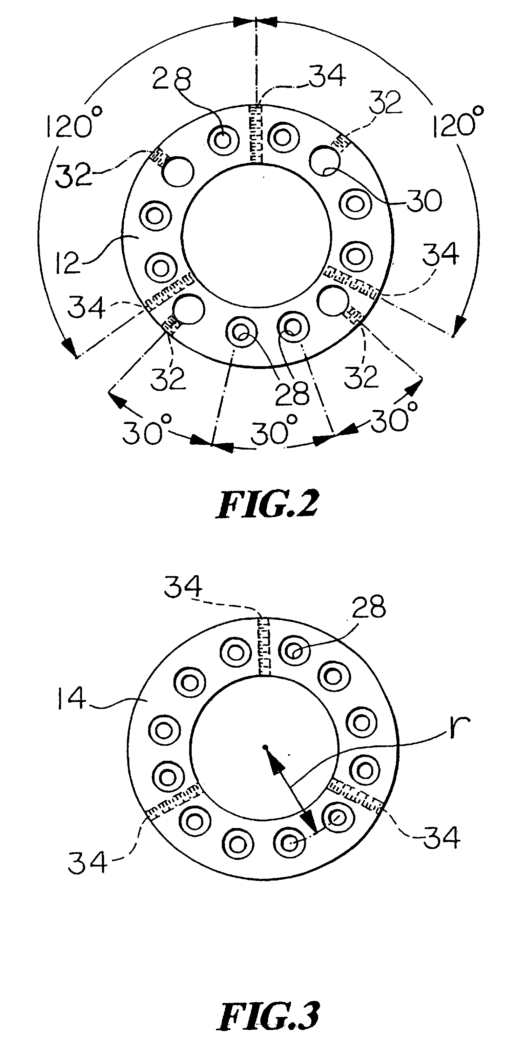

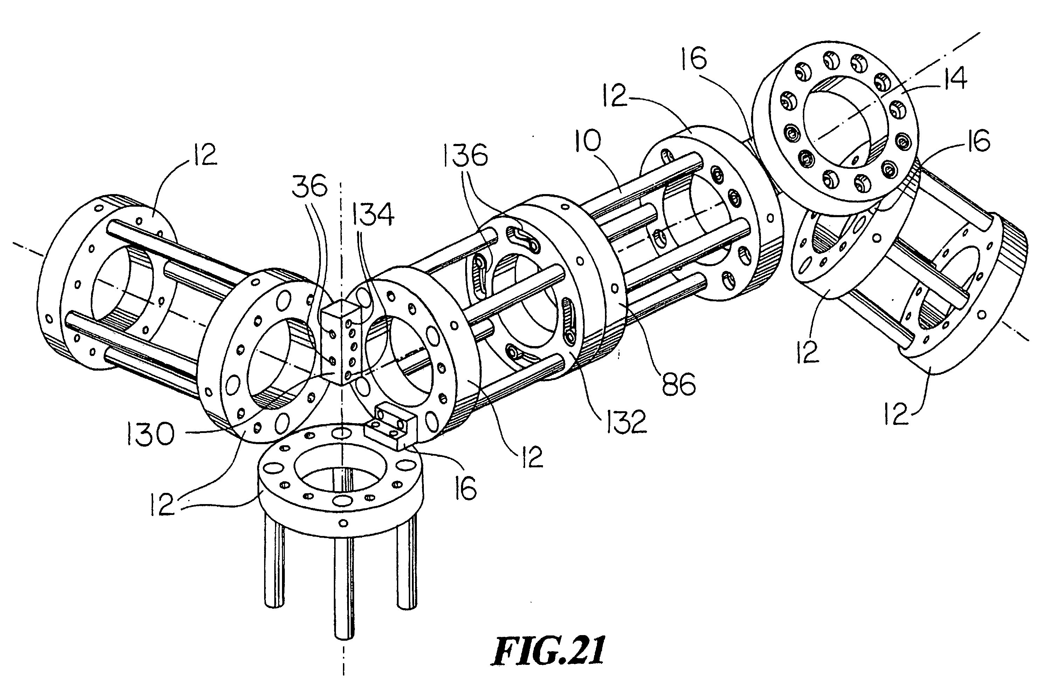

Figure 2 is a detail drawing showing a typical specification of an optical plate 12 in a set such as is described in Figure 1 and Figure 3 shows a like detail of an optical plate 14 such as has been shown in Figure 1. The cross-sectional aspect illustrated in both Figures 2 and 3, shows an outer radius and a concentric central bore adapted for the mounting of optical elements, and defining a differential radial dimension having holes bored therein. The holes 28 and 30 are positioned in thirty degree increments around the mount and in a set, their distance to the center is a fixed radial value r (Figure 3). Mount 14 may be used to carry an optical element or it might be used as an intermediate plate with corner connectors to bend the optical axis of a system in predetermined angular increments as illustrated in Figure 21.

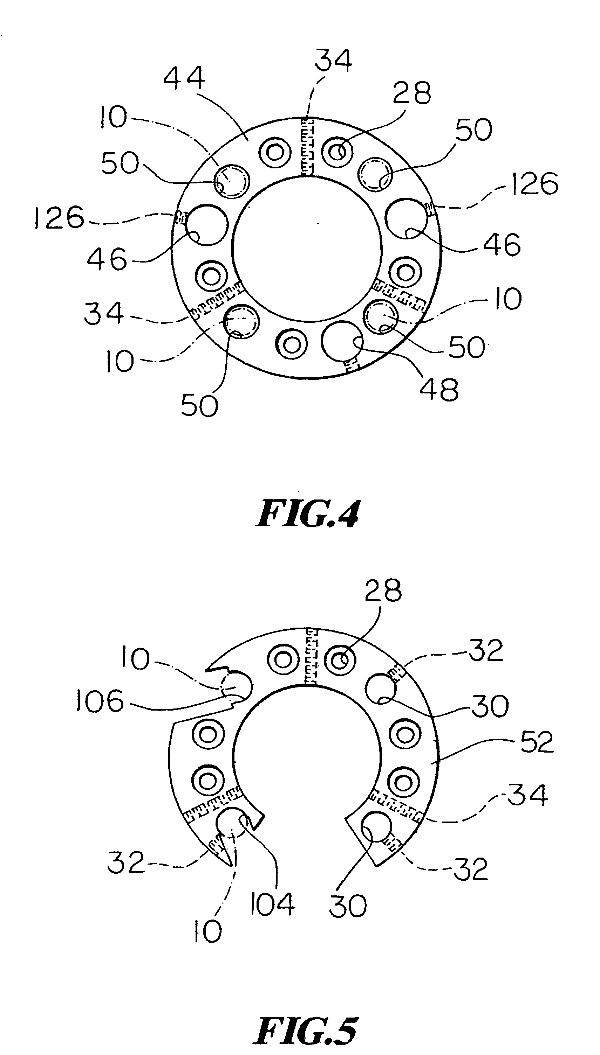

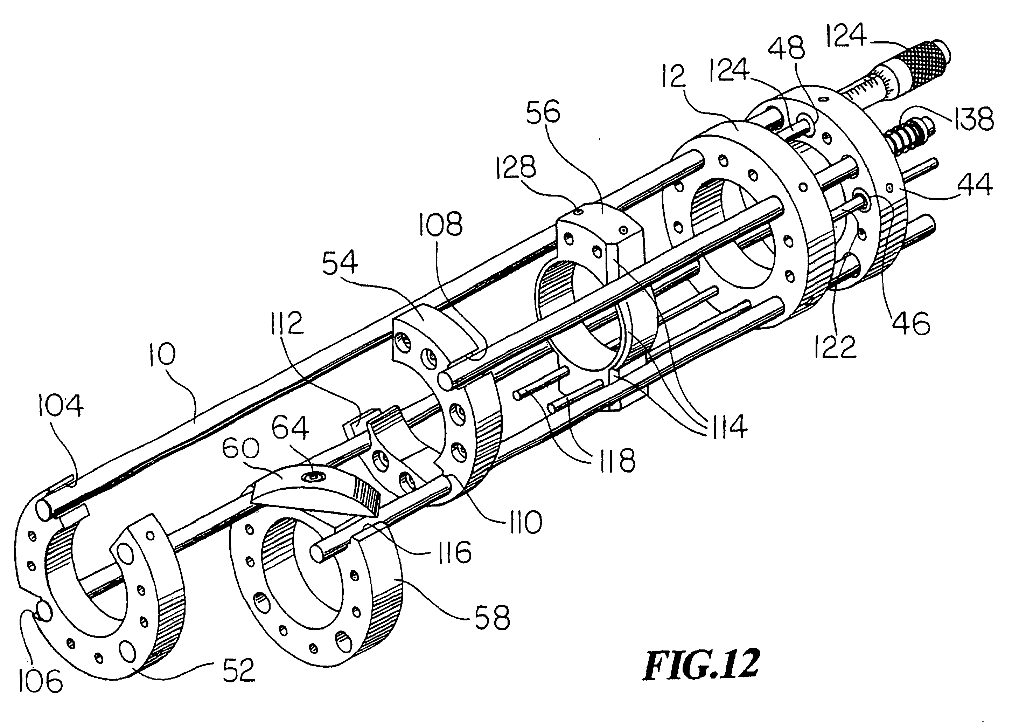

Figure 4 shows mount 44 having spaced, enlarged holes 50, operative to isolate the mount from rods 10. This mount 44 is intended to be used in conjunction with ball-bearing guides fastened to holes 46 by means of set screws in threaded bores 126. When used in a four-rod arrangement as shown at Figure 12, mount 44 rides on bearings 122 for a smooth axial movement so as to provide focusing or any other functions requiring precisely controlled movement in the direction of the rods. Fine positional adjustments can be achieved by a fine adjustment screw micrometer 124 shown as fastened at 48 (Figures 4 and 12) and used in conjunction with micrometer push return spring 138. When turned in one direction, say clockwise, the tip of this micrometer screw forces against mount 12 causing mount 44 to move in a first direction, i.e., to the right, when turned in the opposite direction, mount 44 moves in the opposite direction under the action of micrometer push return spring 138.

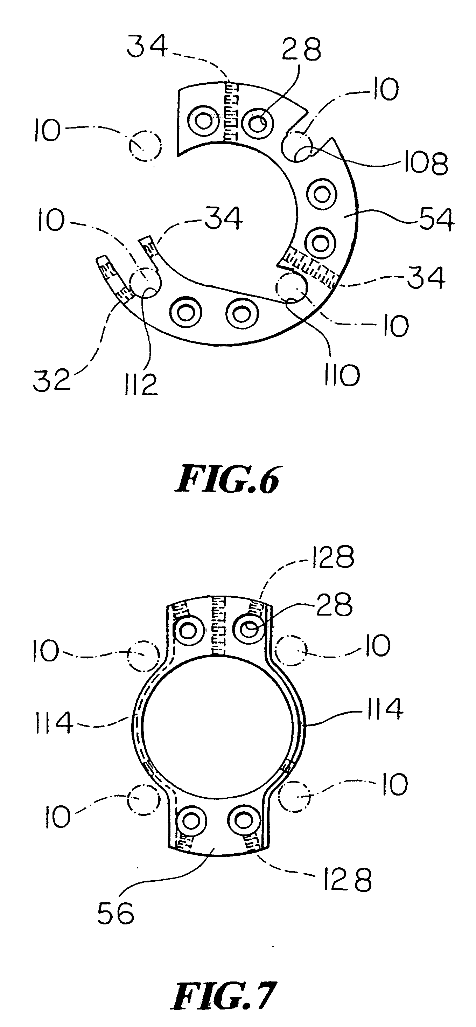

Figure 5 shows a mount 52 which is adapted to be easily inserted into or removed from an assembly having only two rods 10. At Figure 12, the mount 52 is shown so attached. First insertable opening 104 is initially inserted on the top rod 10 and then the mount is rotated clockwise until second insertable opening 106 sits on the other rod 10. Mount 52 is then locked into position using a set screw in threaded bore 32 (Figure 5) near opening 104. Mount 52 additionally affords easy insertion and removal of optical components as a concomitant of the discontinuity or gap in its circumference.

In Figure 6 there is depicted a mount 54 which can be easily inserted or removed from a four-rod system as further illustrated in Figure 12. To insert mount 54 as shown, a rod 10 is introduced into third insertable opening 108 and the mount is turned clockwise until fourth insertable opening 110 and fifth insertable opening 112 sit on the other two rods. Mount 54 is then locked into position by means of a set screw in threaded bore 32 in the vicinity of fifth insertable opening 112.

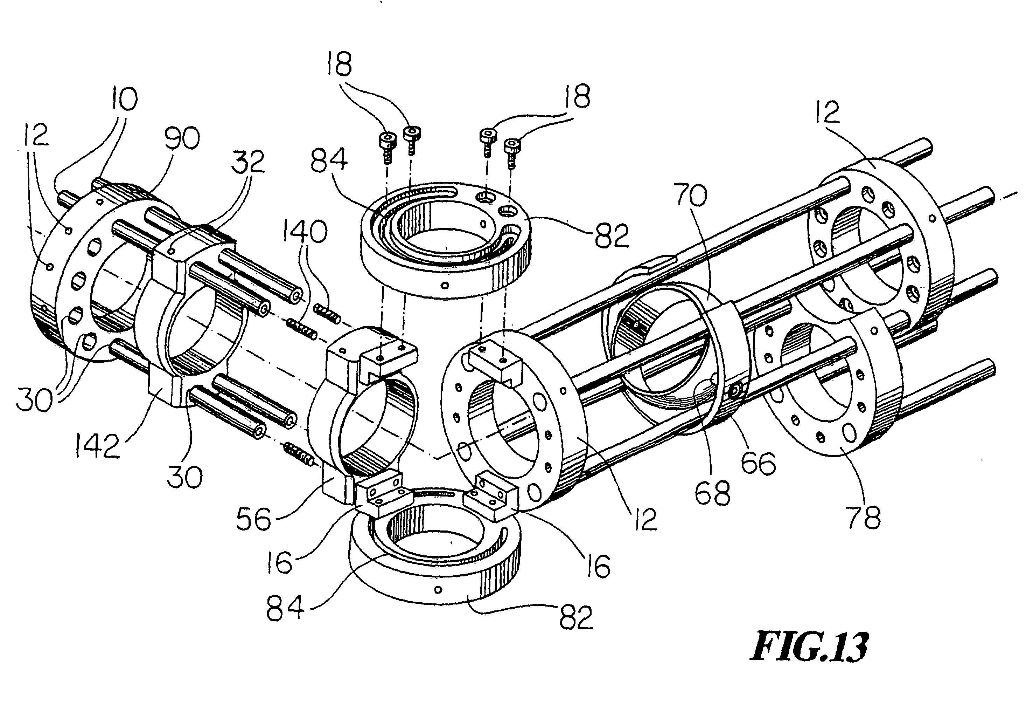

An optical mount denoted by numeral 56 is shown in Figure 7. A major portion of the differential radial material has been removed from the mount leaving two opposed portions and a thin ring-like portion containing the inner radial dimension. Mount 56 can be inserted into an assembled set utilizing four rods 10 as shown in Figure 12. Mount 56 has beveled edges 114 that facilitate its assembly into a four-rod system. Figure 12 shows mount 56 supported by thin rods 118 and locked into position by means of set screws in threaded bores 128. Figure 17 shows mount 56 types used with corner connectors 16 and screws 18 in the construction of partial optical cubes while Figure 13 shows mount 56 with corner connector 16 used in another construction scheme.

A modification of mount 56 denoted by the numeral 142 is shown in Figure 13. Mount 142 has four rod accepting apertures 30 which accept the pass-through of rods 10 with provision for securing at any point along said rods by means of set screws at 32. Optical mounting plate 56 may then be secured to the ends of the rods 10 by means of long set screws 140 through corner connector 16.

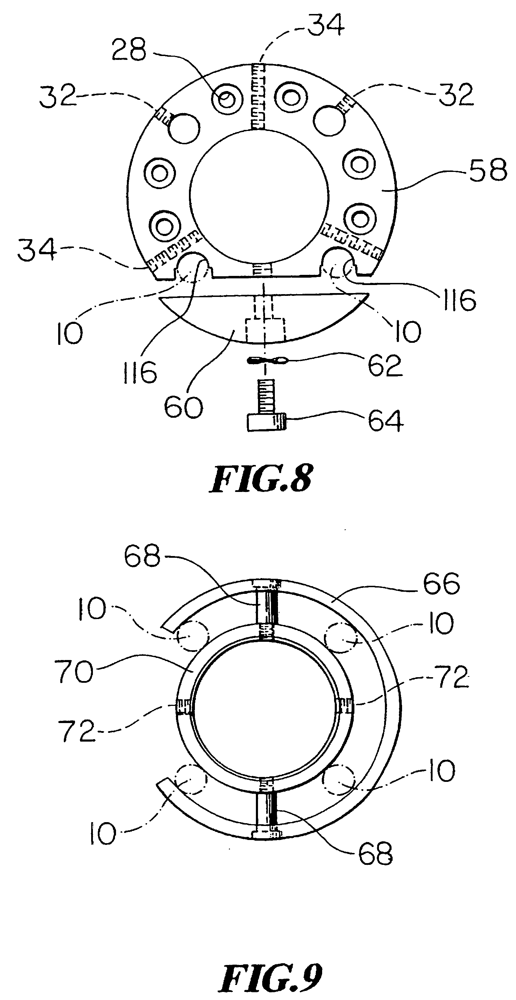

Figure 8 depicts an optical mounting plate denoted by the numeral 58. Mount 58 also possesses the facility of being insertable into a two-rod system. Figure 12 shows a typical construction with mount 58's insertable openings 116 directly engaging rods 10. Locking plate 60, shown in cross section in Figure 8 as.a segment of the circle, may then be employed to secure the mount 58 by means of locking plate securing screw 64 through flex washer 62 into the threads so provided. The flex washer 62 allows the plate 58 to rotate around the screw 64 thus allowing its insertion into the assembly as shown in Figure 12. Locking plate 60 is then rotated until it is in line with mount 58.

Figure 9 shows details of an optical mounting plate 66 having incorporated within its incomplete annular outer member, a tilting lens mount 70, as claimed in claim 21 of the present application, and not claimed as such. Figure 13 illustrates a typical assembly of mount 66 into a construction scheme. The lens mount 70 is spherical on its exterior surface and cylindrical interiorly, said cylindrical interior surface being adapted to hold optical elements. Mount 70 is secured by two securing screws 68, located 180 degrees apart. Rods 10 pass tangent to mount 70 at the outside and to mount 66 on the inside as shown in Figures 9 and 13. Optical elements are intended to be secured by means of set screws at threaded bores 72. Lens mount 70 can be tilted around the axis passing through the two screws 68 (Figure 13) while its spherical outside surface remains in contact with rods 10 at four points. The entire tilting lens assembly can also be rotated about the center of an optical axis parallel with rods 10 and passing through the center of mounts 12.

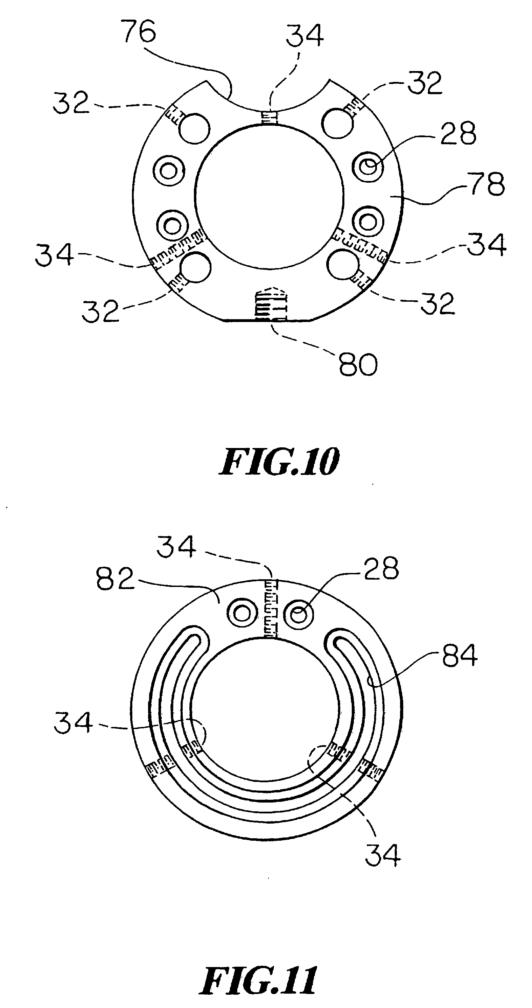

Figure 10 shows an optical mounting plate denoted by the numeral 78. Mount 78 can be assembled outside of the optical path in a given construction scheme. A cutout portion 76 has been removed from the generally circular cross section to eliminate obstruction of the light path as shown in Figure 13. The side of the mount 78 opposite to the cutout portion 76 has a threaded bore that allows it to be supported by mounting devices such as vertical posts and like devices as used in optical benches.

Figure 11 shows an optical mounting plate which is somewhat similar to the second mount 14 of Figure 3 but modified in that ten of its twelve holes have been joined together so as to form incomplete annular aperture 84 thus to permit continuous change of angle in the optical axis as further shown in Figure 13. The optical axis of mount 56 can be positioned at any point along the annular path provided by annular aperture 84. Because of its small dimension, mount 56 can be positioned at angles less than ninety degrees to the optical axis of the mount 12. Mount 82 is shown as connected to corner connector 16 by means of screws 18.

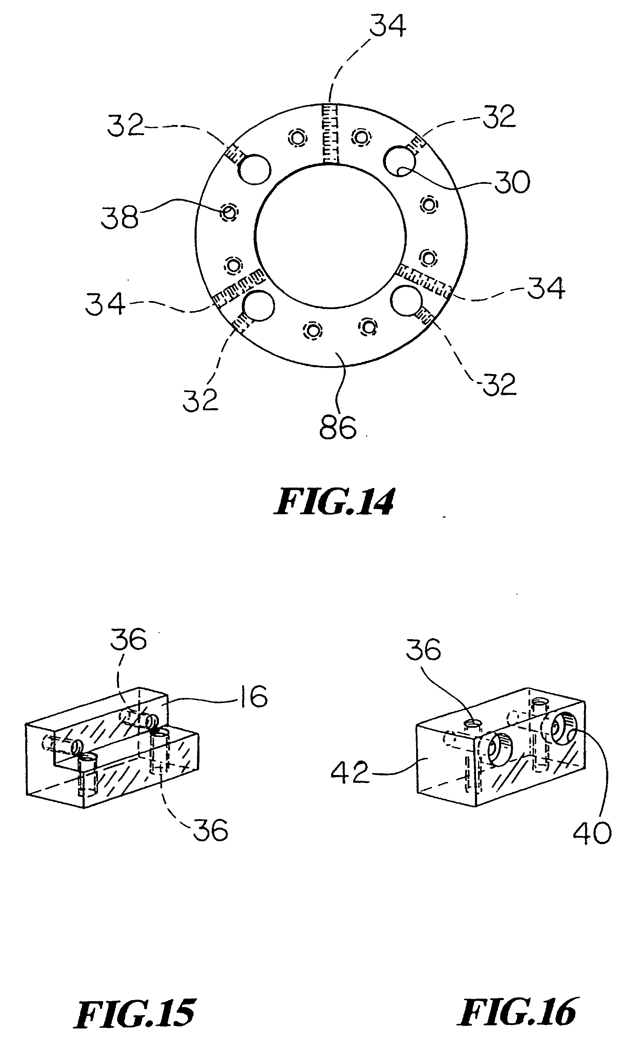

Figure 14 shows an optical mounting plate 86 intended to be used with a modified type of corner connector. Mount 86 is intended to be used with corner connector 42 (Figure 16) for the purpose of joining two optical cubes together as illustrated in Figure 17. Figure 15 shows detail of the corner connector 16.

Figure 17 shows an optical cube and use of cover plate 88 to light seal the cube, as claimed in claim 24 of the present application, and not claimed as such. The cover plate may be constructed of opaque plastic and may be secured by snap-in press fit. The components making up the optical cube illustrated in Figure 17 have been described supra.

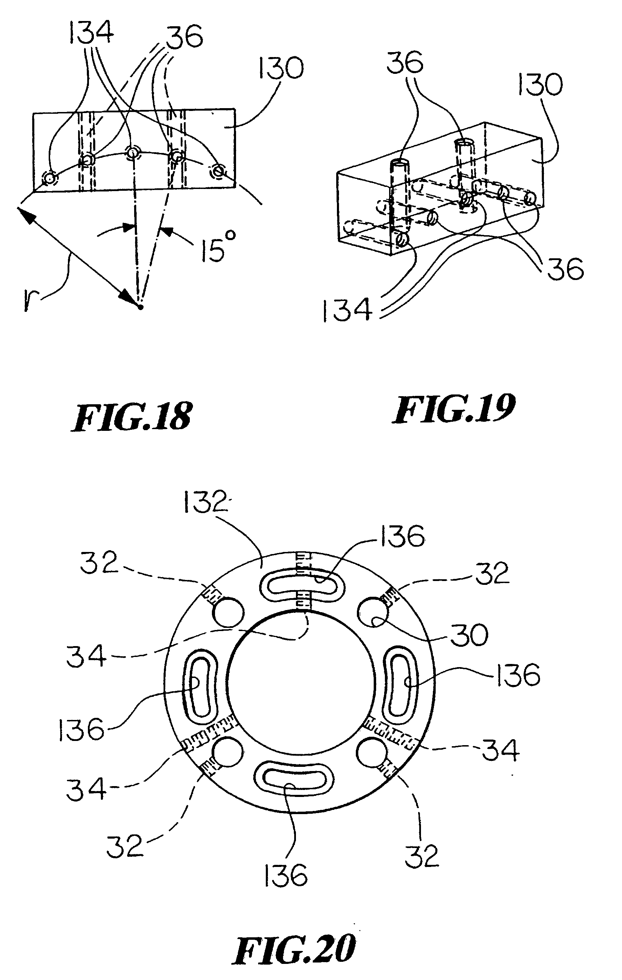

Also as has been described supra, Figures 18 and 19 show detail views of a corner connector 130 having threaded bores 134 radially spaced and with threaded bores 36 adapted to register with counter bores 28 of optical mounting plates.

Because the threaded bores are positioned with the same radius as in all mounting plates in a set, connector 130 may be utilized similarly to connector 16, employing only threaded bores 36. Alternatively, connector 130 can be used to rotate the optical axis of a perpendicularly mounted optical plate by forty-five degrees as shown in Figure 21.

Mount 132 allows the entire optical axis to be rotated as illustrated in Figure 21. Mount 132 presents a modification of mount 12 in which counter bored apertures 28 are joined together in circular arcs 136 so as to allow axial adjustment of the plate. Rods shown to the right of mount 132 are held by mount 86 and these two mounts are shown as held together by four screws through openings 136. By loosening these four screws in mount 132, mount 86 can rotate thirty degrees and can be secured at any position therebetween.

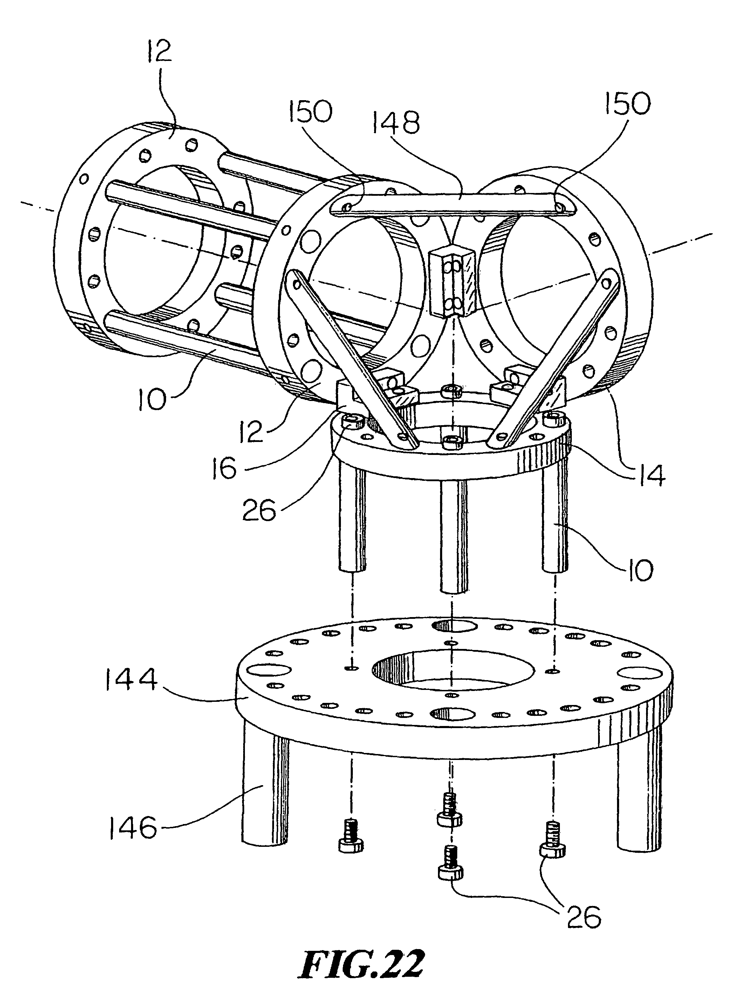

Figure 22 illustrates the facility of joining different sized sets of optical construction plates by means of an intermediate mount 144 and screws 26. The ends of rods 148 have been cut at forty-five degree angles and have threaded bores 150. Plate retaining rods 146 apply to a larger optical mounting plate set.

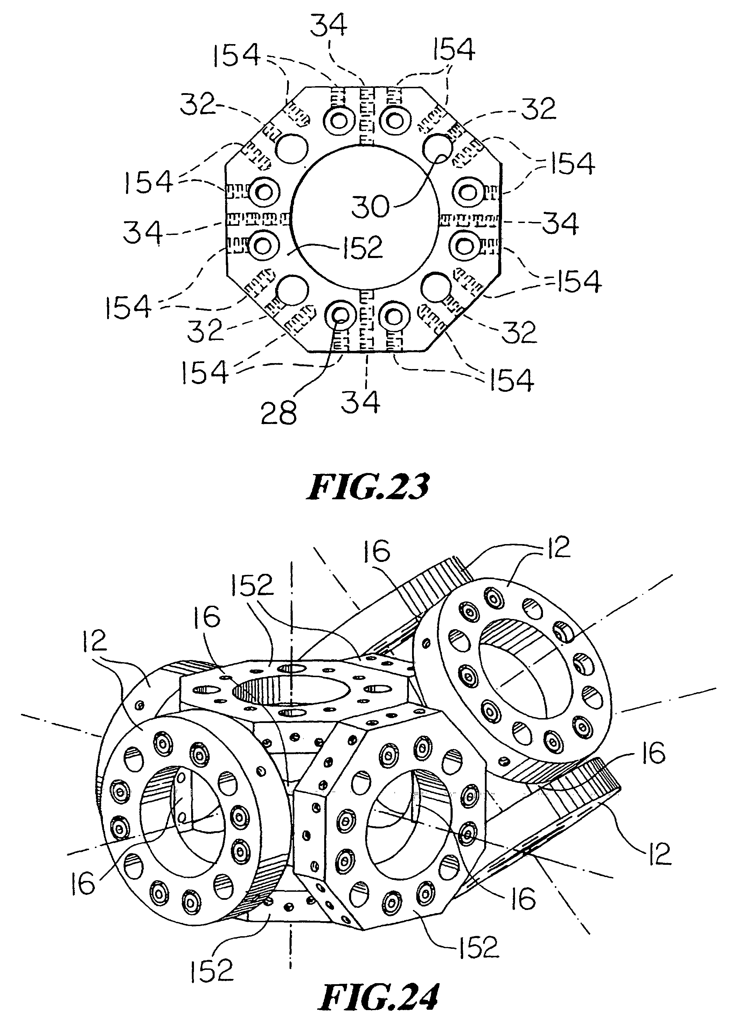

Figure 23 presents an optical mounting plate 152 having a polygonal outer shape, however, an inscribed circle therein has the same diameter dimension as the priorly described optical mounting plates. Tapped bores 154 are utilized in the arrangement shown in Figure 24 showing the connection of two or more optical cubes. Mount 152 simplifies the making of optical cubes that would otherwise require the use of a large number of corner connectors. The sides of mount 152 have tapped bores 154 which have the same spacing as the bores in the corner connectors, therefore, allowing the mount to be fastened directly to any other mount in a set. In figure 24 mount 152 is further shown as being used to connect two or more cubes in a similar arrangement as with mount 86 in Figure 17. Mount 152 is shown as directly fastened to mounts 12 of the rear cube and is secured to the front cube by the use of four corner connectors 16. Since the angle between all adjacent sides of mount 152 is one hundred and thirty five degrees, this mount can be used to rotate the optical axis in forty-five degree increments which adjustment is not possible by other mounts with the exception of mount 82, Figure 11. With the use of mounts 152 and 86, adjacent cubes can be fastened at angles of thirty degree increments with mount 86 and thirty and forty-five degree increments with mount 152.

### Industrial Applicability

In particular, the system may be used in the teaching of optics at any level of sophistication in addition to its applications in constructing prototypical and experimental optical instruments and measuring devices.

## Claims

1. An optical bench system comprising at least one mounting plate (12, 14, 44, 52, 54, 56, 58, 78, 82, 86, 132, 144), said mounting plate being either truncated or not and comprising:
a central bore therethrough for mounting an optical component (24) therein ,the central bore defining an inner radius of the mounting plate;
axially extending apertures (28, 30, 38, 46, 50, 84, 104, 106, 108, 110, 112, 116, 136);
rods (10) passing through said axially extending apertures (30, 50, 104, 106, 108, 110, 112, 116); and
connecting means (16, 146) for connecting a plurality of mounting plates together,
the system being **characterized in that**
said mounting plate is a generally cylindrical mounting plate having a generally circular external boundary defining an outer radius of the mounting plate; and
said mounting plate comprises radially extending threaded bores (34) to secure said optical component (24) to the mounting plate.

2. The optical bench system according to claim 1, wherein the axially extending apertures through which said rods (10) pass through are enlarged so as to isolate said rods from said mounting plate.

3. The optical bench system of claim 1, wherein said axially extending apertures comprise four rod accepting apertures (30, 50).

4. The optical bench system of any one of the previous claims, wherein said at least one mounting plate are at least two mounting plates(12, 14), and wherein said connecting means comprises a comer connector (16) having threaded bores (36), said threaded bores (36) being for screws fastening two of said at least two mounting plates to the corner connector (16).

5. The optical bench system of claim 4, wherein said means for connecting said at least two mounting plates comprise second rods (146).

6. The optical bench system according to any one of the previous claims, further comprising an incomplete annular aperture (84), said incomplete annular aperture (84) being disposed along a substantial portion of the circumference of said mounting plate.

7. The optical bench system according to any one of the previous claims, wherein said at least one mounting plate has a cutout portion.

8. The optical bench of claim 7, wherein the cutout portion is cut from the external boundary of the at least one mounting plate.

9. The optical bench system of claim 8, wherein said cutout portion forms a gap (76) in said mounting plate.

10. The optical bench system of claim 7, wherein said cutout portion forms first and second cutout openings (104,106; 116).

11. The optical bench of claim 7, wherein said cutout portion forms first, second and third cutout openings (108, 110, 112).

12. The optical bench system according to claim 10, further comprising:
plate retaining rods (10) passing through said cutout openings (116); and
a locking plate (60) adapted to mate with said cutout portion to secure said at least one mounting plate to said plate retaining rods (10).

13. The optical bench system of claim 12, wherein said locking plate (60) comprises a bore through which a locking plate securing screw (64) is insertable, said screw (64) being threadable into threads provided in the mounting plate; and
a flex washer (62) through which said screw (64) is insertable so as to permit rotation of said plate about said screw (64).

14. The optical bench system of claim 1, wherein said at least one mounting plate has two opposed portions and a ring-like portion disposed between said opposed portions.

15. The optical bench system according to claim 1, wherein said axially extending apertures include:
rod accepting apertures (30) adapted to accept passthrough thereof of plate retaining rods (10); and
counter-bored apertures (28) adapted to accept fastening screws (18) therethrough.

16. The optical bench system of claim 1, wherein said axially extending apertures are counter-bored apertures (28) adapted to accept fastening screws (18) therethrough.

17. The optical bench system of claim 1, wherein said axially extending apertures include:
spaced enlarged apertures (50) adapted to isolate said mounting plate from said rods (10); and
spaced apertures (46) dimensioned so as to admit ball-bearing guides to be secured therethrough,
said optical bench system further comprising means (126) to secure said ball-bearing guides in said spaced apertures (46).

18. The optical bench system of any one of claims 1 to 5, wherein said radially extending bores (34) are three radially extending threaded bores (34) equally spaced therebetween.

19. The optical bench system of any one of claims 1 to 4, wherein said axially extending apertures comprise arc apertures (136) in the form of circular arcs.

20. The optical bench system of any one of the previous claims, further comprising at least one first additional mounting plate (152), said first additional mounting plate having a polygonal external boundary.

21. The optical bench system of any one of the previous claims, further comprising at least one second additional mounting plate, said second additional mounting plate comprising
an incomplete outer annular member (66); and
a tilting lens mount (70) secured to said incomplete outer annular member (66).

22. The optical bench system according to any one of the previous claims, wherein said axially extending apertures are disposed along a substantially circumferential path.

23. The optical bench system of claim 22, wherein said substantially circumferential path does not cross the external boundary of the mounting plate.

24. The optical bench system of any one of the previous claims, comprising a plurality of mounting elements disposed to assemble an optical cube.

25. The optical system of claim 24, further comprising a comer cover plate (88) to provide light seal.

## Patentansprüche

1. Optisches Banksystem, das mindestens eine Grundplatte (12, 14, 44, 52, 54, 56, 58, 78, 82, 86, 132, 144) umfasst, wobei die genannte Grundplatte entweder kegelstumpfartig ist oder nicht und folgendes umfasst:
eine zentrale Bohrung dort hindurch zur Anbringung einer optischen Komponente (24) darin, wobei die zentrale Bohrung einen inneren Radius der Grundplatte definiert;
sich axial erstreckende Öffnungen (28, 30, 38, 46, 50, 84, 104, 106, 108, 110, 112, 116, 136);
Stangen (10), die durch die genannten sich axial erstreckenden Öffnungen (30, 50, 104, 106, 108, 110, 112, 116) verlaufen; und
eine Verbindungseinrichtung (16, 146) zur Verbindung einer Mehrzahl von Grundplatten miteinander;
wobei das System **dadurch gekennzeichnet ist, dass**
die genannte Grundplatte eine allgemein zylindrische Grundplatte ist, mit einer allgemein runden externen Begrenzung, die einen äußeren Radius der Grundplatte definiert; und
wobei die genannte Grundplatte sich radial erstreckende Gewindebohrungen (349 umfasst, um die genannte optische Komponente (24) an der Grundplatte zu sichern.

2. Optisches Banksystem nach Anspruch 1, wobei die sich axial erstreckenden Öffnungen, durch welche die genannten Stangen (10) verlaufen, vergrößert sind, so dass die genannten Stangen von der genannten Grundplatte isoliert werden.

3. Optisches Banksystem nach Anspruch 1, wobei die genannten sich axial erstreckenden Öffnungen vier Stangenaufnahmeöffnungen (30, 50) umfassen.

4. Optisches Banksystem nach einem der vorstehenden Ansprüche, wobei es sich bei der genannten mindestens einen Grundplatte um mindestens zwei Grundplatten (12, 14) handelt, und wobei die genannte Verbindungseinrichtung einen Eckverbinder (16) mit Gewindebohrungen (36) umfasst, wobei die genannten Gewindebohrungen (36) zur Schraubverbindung von zwei der genannten mindestens zwei Grundplatten mit dem Eckverbinder (16) dienen.

5. Optisches Banksystem nach Anspruch 4, wobei die genannten Einrichtungen zur Verbindung der genannten mindestens zwei Grundplatten zweite Stangen (146) umfassen.

6. Optisches Banksystem nach einem der vorstehenden Ansprüche, wobei das System ferner eine unvollständige ringförmige Öffnung (84) umfasst, wobei die genannte unvollständige ringförmige Öffnung (84) entlang einem wesentlichen Abschnitt des Umfangs der genannten Grundplatte angeordnet ist.

7. Optisches Banksystem nach einem der vorstehenden Ansprüche, wobei die genannte mindestens eine Grundplatte einen Ausschnittabschnitt aufweist.

8. Optisches Banksystem nach Anspruch 7, wobei der Ausschnittabschnitt von der externen Begrenzung der mindestens einen Grundplatte geschnitten ist.

9. Optisches Banksystem nach Anspruch 8, wobei der genannte Ausschnittabschnitt einen Zwischenraum (76) in der genannten Grundplatte bildet.

10. Optisches Banksystem nach Anspruch 7, wobei der genannte Ausschnittabschnitt erste und zweite Ausschnittöffnungen (104, 106; 116) bildet.

11. Optisches Banksystem nach Anspruch 7, wobei der genannte Ausschnittabschnitt erste, zweite und dritte Ausschnittöffnungen (108, 110, 112) bildet.

12. Optisches Banksystem nach Anspruch 10, wobei das System ferner folgendes umfasst:
Plattensicherungsstangen (10), die durch die genannten Ausschnittöffnungen (116) verlaufen; und
eine Verriegelungsplatte (60), die mit dem genannten Ausschnittabschnitt zusammenpassen kann, um die genannte mindestens eine Grundplatte an den genannten Plattensicherungsstangen (10) zu sichern.

13. Optisches Banksystem nach Anspruch 12, wobei die genannte Verriegelungsplatte (60) eine Bohrung umfasst, durch die eine Verriegelungsplatten-Sicherungsschraube (64) eingeführt werden kann, wobei die genannte Schraube (64) in Gewinde geschraubt werden kann, die in der Grundplatte vorgesehen sind; und
mit einer gewellten Scheibe (62), durch welche die genannte Schraube (64) eingeführt werden kann, um eine Rotation der genannten Platte um die genannte Schraube (64) zu ermöglichen.

14. Optisches Banksystem nach Anspruch 1, wobei die genannte mindestens eine Grundplatte zwei entgegengesetzte Abschnitte aufweist, und wobei ein ringartiger Abschnitt zwischen den genannten entgegengesetzten Abschnitten angeordnet ist.

15. Optisches Banksystem nach Anspruch 1, wobei die genannten sich axial erstreckenden Öffnungen folgendes aufweisen:
Stangenaufnahmeöffnungen (30), durch welche Plattensicherungsstangen (10) geführt werden können; und
Schulterbohrungsöffnungen (28), die dort hindurch Befestigungsschrauben (18) aufnehmen können.

16. Optisches Banksystem nach Anspruch 1, wobei es sich bei den genannten sich axial erstreckenden Öffnungen um Schulterbohrungsöffnungen (28) handelt, durch welche Befestigungsschrauben (18) aufgenommen werden können.

17. Optisches Banksystem nach Anspruch 1, wobei die genannten sich axial erstreckenden Öffnungen folgendes aufweisen:
räumlich getrennte vergrößerte Öffnungen (50), welche die genannte Grundplatte von den genannten Stangen (10) isolieren können;
räumlich getrennte Öffnungen (46), die so bemessen sind, dass sie das Sichern von Kugellagerführungen dort hindurch zulassen;
wobei das genannte optische Banksystem ferner eine Einrichtung (126) zur Sicherung der genannten Kugellagerführungen in den genannten räumlich getrennten Öffnungen (46) umfasst.

18. Optisches Banksystem nach einem der Ansprüche 1 bis 5, wobei es sich bei den genannten sich radial erstreckenden Bohrungen (34) um drei sich radial erstreckende Gewindebohrungen (34) handelt, die dazwischen einheitliche Zwischenabstände aufweisen.

19. Optisches Banksystem nach einem der Ansprüche 1 bis 4, wobei die genannten sich axial erstreckenden Öffnungen Bogenöffnungen (136) in Form von runden Bögen umfassen.

20. Optisches Banksystem nach einem der vorstehenden Ansprüche, wobei das System ferner mindestens eine erste weitere Grundplatte (152) umfasst, wobei die genannte erste zusätzliche Grundplatte eine polygonale äußere Begrenzung aufweist.

21. Optisches Banksystem nach einem der vorstehenden Ansprüche, wobei das System ferner mindestens eine zweite weitere Grundplatte umfasst, wobei die genannte zweite weitere Grundplatte folgendes umfasst:
ein unvollständiges äußeres, ringförmiges Element (66); und
eine kippbare Linsenfassung (70), die an dem genannten unvollständigen äußeren, ringförmigen Element (66) gesichert ist.

22. Optisches Banksystem nach einem der vorstehenden Ansprüche, wobei die genannten sich axial erstreckenden Öffnungen entlang einem im Wesentlichen umfänglichen Pfad angeordnet sind.

23. Optisches Banksystem nach Anspruch 22, wobei der genannte im Wesentlichen umfängliche Pfad die externe Begrenzung der genannten Grundplatte nicht kreuzt.

24. Optisches Banksystem nach einem der vorstehenden Ansprüche, wobei das System eine Mehrzahl von Befestigungselementen umfasst, die so angeordnet sind, dass sie einen optischen Würfel bilden.

25. Optisches System nach Anspruch 24, wobei das System ferner eine Eckdeckplatte (88) umfasst, um einen lichtdichten Verschluss vorzusehen.

## Revendications

1. Système de banc optique comprenant au moins une plaque de montage (12,14,44,52,54,56,58,78,82,86,132,144), ladite plaque de montage étant soit tronquée soit non et comprenant:
un perçage central à travers celle-ci pour installer un composant optique (24) dans celui-ci, le perçage central définissant un rayon interne de la plaque de montage;
des ouvertures s'étendant axialement (28,30,38,46,50,84, 104,106,108,110,112,116,136);
des tiges (10) passant à travers lesdites ouvertures s'étendant axialement (30,50,104,106,108,110,112,116); et
des moyens de connexion (16,146) pour connecter plusieurs plaques de montage ensemble,
le système étant **caractérisé en ce que**
ladite plaque de montage est une plaque de montage généralement cylindrique ayant une limite externe généralement circulaire définissant un rayon externe de la plaque de montage; et
ladite plaque de montage comprend des perçages taraudés s'étendant radialement (34) pour fixer ledit composant optique (24) à la plaque de montage.

2. Système de banc optique selon la revendication 1, où les ouvertures s'étendant axialement à travers lesquelles lesdites tiges (10) passent sont agrandies pour isoler lesdites tiges de ladite plaque de montage.

3. Système de banc optique selon la revendication 1, où lesdites ouvertures s'étendant axialement comprennent quatre ouvertures d'acceptation de tiges (30,50).

4. Système de banc optique selon l'une des revendications précédentes, où au moins une plaque de montage précitée sont au moins deux plaques de montage (12,14), et où ledit moyen de connexion comprend un connecteur de coin (16) ayant des perçages taraudés (36), lesdits perçages taraudés (36) étant prévus pour des vis fixant deux d'au moins deux plaques de montage précitées au connecteur de coin (16).

5. Système de banc optique selon la revendication 4, où lesdits moyens pour relier au moins deux plaques de montage précitées comprennent des deuxièmes tiges (146).

6. Système de banc optique selon l'une des revendications précédentes, comprenant en outre une ouverture annulaire incomplète (84), ladite ouverture annulaire incomplète (84) étant disposée le long d'une portion importante de la circonférence de ladite plaque de montage.

7. Système de banc optique selon l'une des revendications précédentes, où au moins une plaque de montage précitée présente une portion de découpure.

8. Banc optique selon la revendication 7, où la portion de découpure est découpée de la limite externe d'au moins une plaque de montage précitée.

9. Système de banc optique selon la revendication 8, où ladite portion de découpure forme un espace (76) dans ladite plaque de montage.

10. Système de banc optique selon la revendication 7, où ladite portion de découpure forme des première et deuxième ouvertures de découpure (104,106;116).

11. Banc optique selon la revendication 7, où ladite portion de découpure forme des première, deuxième et troisième ouvertures de découpure (108,110,112).

12. Système de banc optique selon la revendication 10, comprenant en outre:
des tiges de retenue de plaque (10) passant à travers lesdites ouvertures de découpure (116); et
une plaque de verrouillage (60) conçue pour correspondre à ladite portion de découpure pour fixer au moins une plaque de montage précitée auxdites tiges de retenue de plaque (10).

13. Système de banc optique selon la revendication 12, où ladite plaque de verrouillage (60) comprend un perçage à travers lequel une vis de fixation de plaque de verrouillage (64) peut être insérée, ladite vis (64) étant vissée dans des filets réalisés dans la plaque de montage; et
une rondelle flexible (62) à travers laquelle ladite vis (64) est insérable de manière à permettre la rotation de ladite plaque autour de ladite vis (64).

14. Système de banc optique selon la revendication 1, où ladite au moins une plaque de montage présente deux portions opposées ainsi qu'une portion semblable à un anneau disposée entre lesdites portions opposées.

15. Système de banc optique selon la revendication 1, où lesdites ouvertures s'étendant axialement comprennent:
des ouvertures d'acceptation de tige (30) conçues pour accepter le passage à travers celles-ci de tiges de retenue de plaque (10); et
des ouvertures à épaulement (28) aptes à accepter des vis de fixation (18) à travers celles-ci.

16. Système de banc optique selon la revendication 1, où lesdites ouvertures s'étendant axialement sont des ouvertures à épaulement (28) aptes à accepter des vis de fixation (18) à travers celles-ci.

17. Système de banc optique selon la revendication 1, où lesdites ouvertures s'étendant axialement comprennent:
des ouvertures agrandies espacées (50) aptes à isoler ladite plaque de montage desdites tiges (10); et
des ouvertures espacées (46) dimensionnées pour admettre que des guides de palier à billes soient fixés à travers celles-ci,
ledit système de banc optique comprenant en outre des moyens (126) pour fixer lesdits guides de paliers à billes dans lesdites ouvertures espacées (46).

18. Système de banc optique selon l'une des revendications 1 à 5, où lesdits perçages s'étendant radialement (34) sont trois perçages taraudés s'étendant radialement (34) espacés uniformément entre ceux-ci.

19. Système de banc optique selon l'une des revendications 1 à 4, où lesdites ouvertures s'étendant axialement comprennent des ouvertures arquées (136) sous la forme d'arcs circulaires.

20. Système de banc optique selon l'une des revendications précédentes, comprenant en outre au moins une première plaque de montage additionnelle (152), ladite première plaque de montage additionnelle présentant une limite externe polygonale.

21. Système de banc optique selon l'une des revendications précédentes, comprenant en outre au moins une deuxième plaque de montage additionnelle, ladite deuxième plaque de montage additionnelle comprenant
un élément annulaire externe incomplet (66); et
une monture basculante (70) de lentille fixée audit élément annulaire externe incomplet (66).

22. Système de banc optique selon l'une des revendications précédentes, où lesdites ouvertures s'étendant axialement sont disposées le long d'un chemin sensiblement circonférentiel.

23. Système de banc optique selon la revendication 22, où ledit chemin sensiblement circonférentiel ne croise pas la limite externe de la plaque de montage.

24. Système de banc optique selon l'une des revendications précédentes, comprenant plusieurs éléments de montage disposés pour assembler un cube optique.

25. Système optique selon la revendication 24, comprenant en outre une plaque de recouvrement de coin (88) pour réaliser un léger joint.
